# EUROPÄISCHE PATENTSCHRIFT

(11) **EP 0 944 973 B1**
(45) Veröffentlichungstag und Bekanntmachung des Hinweises auf die Patenterteilung: **29.12.2004**
(21) Anmeldenummer: 97948858.2
(22) Anmeldetag: 03.11.1997
(51) Int. Cl.: H04L 1/24, H04B 1/12

(54) **VERFAHREN ZUR STÖRSIGNALUNTERDRÜCKUNG BEI DER ÜBERTRAGUNG DIGITALER SIGNALE**
METHOD FOR SUPPRESSING INTERFERENCE SIGNALS DURING TRANSMISSION OF DIGITAL SIGNALS
PROCEDE POUR SUPPRIMER LES SIGNAUX PARASITES LORS DE LA TRANSMISSION DE SIGNAUX NUMERIQUES

(30) Priorität: 08.11.1996 DE 19646164
(43) Veröffentlichungstag der Anmeldung: 29.09.1999
(73) Patentinhaber: Deutsche Telekom AG, 53113 Bonn (DE)
(72) Erfinder: RUDOLPH, Dietmar, D-14163 Berlin (DE); HÖRLLE, Christian, D-10717 Berlin (DE); SCHÄFER, Andreas, D-15910 Freiwalde (DE)
(86) Internationale Anmeldenummer: PCT/EP1997/006042
(87) Internationale Veröffentlichungsnummer: WO 1998/021849

(56) Entgegenhaltungen:
- EP-A- 0 708 546
- DE-A- 4 335 843
- DE-A- 4 430 348
- US-A- 5 313 497
- WIDROW B ET AL: "ADAPTIVE NOISE CANCELLING: PRINCIPLES AND APPLICATIONS" PROCEEDINGS OF THE IEEE, Bd. 63, Nr. 12, 1.Dezember 1975, Seiten 1692-1716, XP000567974 in der Anmeldung erwähnt

## Beschreibung

Die Erfindung betrifft ein Verfahren zur Übertragung digitaler Signale, insbesondere in den AM-Bändern, wobei für zu übertragende Datenblöcke eine hochstufige Modulation, vorzugsweise eine 32 APSK oder 64 APSK, verwendet wird.

Bei der digitalen Rundfunkübertragung müssen aus Effizienzgründen hochstufige Modulationsverfahren, wie das 64 APSK (Amplitude Phase shift keying) eingesetzt werden. Diese hochstufigen Modulationsverfahren haben jedoch den Nachteil, daß bereits geringe Störsignale eine Verfälschung der empfangenen Daten bewirken. Dieses Problem wird einerseits dadurch gelöst, daß die Sendeleistung entsprechend groß gewählt wird, so daß der Einfluß des kleineren Störsignals zurückgeht. Andererseits werden Störunterdrückungssysteme auf der Empfängerseite eingesetzt, die das Störsignal aus dem empfangenen Signal herausfiltern. Dies hat den Vorteil, daß sich der Sender mit einer geringeren Leistung betreiben läßt.

Aus dem Artikel "Adaptive Noise Cancelling: Principles and Applications", B. Widrow et al., Proceedings of the IEEE, VOL. 63, No. 12, Dec. 1975, Seiten 1692 bis 1716, ist eine Struktur beschrieben, die empfängerseitig zwei Signaleingänge aufweist. Am ersten Signaleingang liegt das Nutzsignal einschließlich einer Störung, am zweiten Signaleingang liegt die Störung alleine an. Diese am zweiten Eingang anliegende Störung wird adaptiv gefiltert und von dem empfangenen Signal am ersten Eingang subtrahiert. Als Ergebnis liegt dann das weiterzuverarbeitende Nutzsignal vor.

Dieses Störunterdrückungssystem hat den Nachteil, daß ein aufwendiges und damit teures adaptives Filter eingesetzt werden muß. Darüber hinaus ist es erforderlich, daß das Störsignal alleine ständig meßbar ist. Dieses System ist für den Rundfunkbereich nicht anwendbar.

Aus der EP 0 708 546 A2 ist ein Verfahren zur Übertragung von auf einen Träger modulierten Signalen bekannt, bei welchem eine Testsequenz in periodischem Wechsel mit einem Nutzsignal übertragen wird. Die hier vorgeschlagene Testsequenz besteht aus vordefinierten Symbolen, die dem Empfänger bekannt sein müssen.

Die DE 43 35 843 A1 betrifft ein Verfahren zur Auslöschung digitaler quasi-periodischer Störsignale, bei dem das aus Nutzsignal und Störsignal bestehende Gesamtsignal in Blöcke der Länge der Periode des Störsignals unterteilt wird. Nachteilig ist dabei, daß ein Störsignal in quasi-periodischer Ausprägung vorliegen muß, und daß das Gesamtsignal in Blöcke unterteilt werden muß, deren Länge der Periode des Störsignals entspricht.

Die DE 44 30 348 A1 schlägt ein Verfahren vor, bei dem eine Störung von auf einen Träger modulierten digitalen Signalen dadurch unterdrückt werden soll, daß der Vektor des Störträgers ermittelt wird, und daß so das Nutzsignal vom Störträger befreit werden kann.

Die Aufgabe der vorliegenden Erfindung besteht deshalb darin, ein Verfahren zur Übertragung digitaler Signale anzugeben, bei dem mit einfachen Mitteln eine Störsignalunterdrückung möglich ist. Diese Aufgabe wird von einem Verfahren gelöst, daß die Merkmale des Anspruchs 1 aufweist. Dadurch, daß eine gleichanteilsfreie Testsequenz, die in periodischem Wechsel mit einem Nutzsignal übertragen wird, empfängerseitig gemittelt wird, läßt sich auf einfache Weise aus der gemittelten Testsequenz der Störträger ermitteln. Es wird also zur Ermittlung eines Störsignals ein Intervall der Testsequenz ausgewählt und gemittelt. Dadurch daß sich die eigentlichen binären Daten bei der Mittelung aufheben, bleibt nur das Störsignal übrig. Es verbleibt dann der Schritt, bestimmte Störsignale von Empfangssignalen zu subtrahieren, so daß das Verfahren lediglich einen einfachen Aufbau benötigt und insbesondere ein adaptives Filter entbehrlich ist. Darüber hinaus ist es nicht notwendig, daß das Störsignal herausgelöst aus dem übertragenen Datenstrom ständig vorliegt.

Als besonders vorteilhaft hat sich herausgestellt, jedem übertragenen Datenblock eine als Testsequenz bezeichnete Folge binärer Daten voranzustellen, die niederstufig moduliert werden, beispielsweise mittels einer 2PSK Modulation. Vorzugsweise ist die Testsequenz als Pseudo-Random-Folge gewählt, die ausreichend lange und gleichanteilsfrei ist. Mit Hilfe dieses niederstufigen Modulationsverfahrens ist es empfängerseitig in einfacher Weise möglich, einerseits den Takt und andererseits dessen Phasenlage abzuleiten, was zur Bearbeitung der Datenblöcke notwendig ist.

In einer weiteren vorteilhaften Ausgestaltung der Erfindung weist die übertragene Signalfolge sogenannte Lücken auf, in denen der Sender nichts sendet. Diese Lücken wiederholen sich periodisch und dienen dem Empfänger zur Messung von Störsignalen.

Weitere vorteilhafte Ausgestaltungen der Erfindung ergeben sich aus den übrigen abhängigen Ansprüchen.

Die Erfindung wird nun anhand eines Ausführungsbeispiels mit Bezug auf die Zeichnung näher erläutert. Dabei zeigen:
- Figur 1a: ein Funktionsblockdiagramm eines Senders,
- Figur 1b: ein Funktionsblockdiagramm eines Empfängers, und
- Figur 2: mehrere Diagramme zur Erläuterung des Verfahrens.

Bei der digitalen Übertragung in den (bisherigen) AM-Bändern (Rundfunkbändern) wird auf das bisher bestehende Kanalraster von 9 KHz zurückgegriffen.. Selbstverständlich ist je nach Region ein Kanalraster von 10 KHZ einsetzbar, wobei sich die übertragbare Datenrate um ca. 11 % erhöht. Eine bessere Audioqualität und/oder eine größere Rate für die Zusatzdaten läßt sich damit also erzielen. Die Information beispielsweise über die verwendete Bandbreite entnimmt der Empfänger bei einem Einträgerverfahren aus einem bestimmten Abschnitt der übertragenen Daten, beispielsweise aus einer Testsequenz.

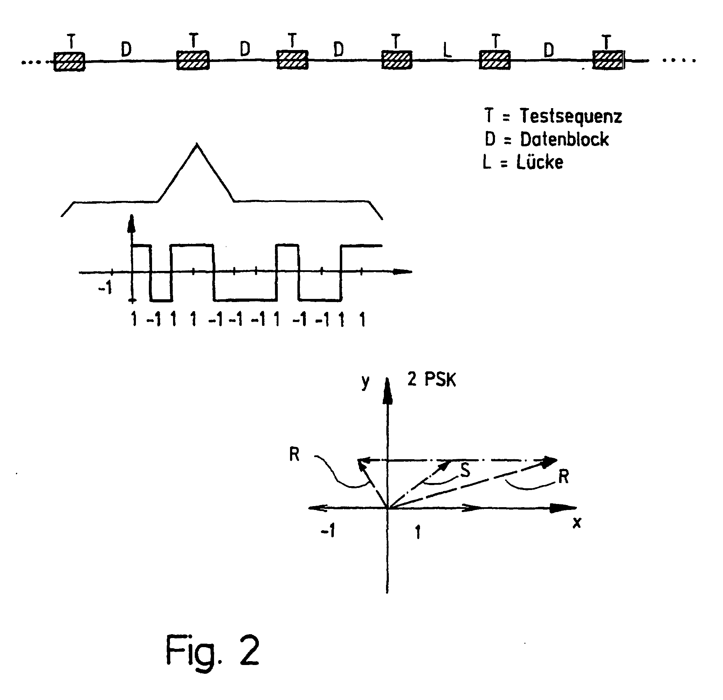

Im vorliegenden Verfahren wird grundsätzlich ein Datenstrom übertragen, der unterschiedliche sich abwechselnde Sequenzen aufweist, wie in Figur 2 dargestellt. Zunächst ist eine als "Datenblock" bezeichnete Sequenz zu nennen, innerhalb der das digitalisierte Nutzsignal übertragen wird. Wie bereits erwähnt, werden die binären Daten des Nutzsignals einer hochstufigen Modulation, beispielsweise einer 64 APSK Modulation, unterzogen. Dem Datenblock geht die ebenfalls bereits erwähnte Testsequenz voraus, deren binäre Daten unterschiedliche Informationen beinhalten, die für die Rückgewinnung des Nutzsignals auf der Empfängerseite notwendig sind. Im Gegensatz zu den Daten des Datenblocks werden die Daten der Testsequenz niederstufig moduliert, beispielsweise mittels des 2PSK-Verfahrens.

Die angegebene Abfolge von Testsequenz und Datenblock wiederholt sich periodisch, wobei die Testsequenz vorzugsweise 25 mal pro Sekunde gesendet wird.

In größeren periodischen Abständen, beispielsweise 1 mal pro Sekunde, wird der Datenblock durch eine Sequenz ersetzt, die als "Lücke" bezeichnet ist. Innerhalb dieses Zeitabschnitts sendet der Sender keine Informationen, so daß der Empfänger lediglich ein möglicherweise vorhandenes Störsignal empfängt.

Der Testsequenz selbst kommen mehrere Funktionen im Empfänger zu. So enthält sie beispielsweise die Information, ob eine analoge oder eine digitale Übertragung vorliegt. Im Falle der digitalen Übertragung entnimmt der Empfänger die Kanalbandbreite mit den zugehörigen Einstellungen. Des weiteren läßt sich-aus der Testsequenz neben der genauen Amplitude des Signals die exakte Trägerfrequenz und deren exakte Phase sowie das exakte Timing des Taktes bestimmen. Diese Informationen sind für die Demodulation notwendig. Eine bisher eingesetzte Phase-Locked-Loop läßt sich dadurch einsparen. Darüber hinaus läßt sich die Impulsantwort des Übertragungskanals und die Übertragungsfunktion des Kanals bestimmen, womit eine Einstellung eines adaptiven Entzerrers zur Entzerrung der empfangenen Daten möglich wird. Dadurch erreicht man die "single frequency network" Fähigkeit der digitalen Übertragung beim Einträgerverfahren, denn der Empfänger unterscheidet nicht zwischen einem Echo und dem Signal von einem weiteren Sender.

Letztendlich ist es möglich, ein vorhandenes Störsignal anhand der Testsequenz zu messen. Als Störsignal ist an einen Störträger gedacht, der von einem AM-Sender stammt, der im gleichen Kanal arbeitet. Die Frequenz dieses Störträgers liegt nahezu in der Mitte der Kanalbandbreite, da Rundfunksender üblicherweise mit einer sehr hohen Frequenzgenauigkeit senden. Die Bestimmung des Störträgers nach Betrag und Phase erfolgt nun wie folgt:

Im (digitalen) Sender wird eine Pseudo-Random-Folge erzeugt und mit einem niederstufigen Modulationsverfahren, hier das 2PSK verarbeitet und gesendet. Als Pseudo-Random-Folge wird eine Folge binärer Daten bezeichnet, die sich nicht wiederholen und gemittelt Null ergeben, also gleichanteilsfrei sind. In Figur 2 ist schematisch eine solche Folge mit den Werten 1, -1 gezeigt, die im Mittel Null ergeben, so daß die Folge gleichanteilsfrei ist. Im ebenfalls in Figur 2 gezeigten 2PSK-Diagramm ist das Datum -1 als nach links verlaufender Zeiger und das Datum +1 als nach rechts verlaufender Zeiger auf der X-Achse beschrieben. Die sogenannte Entscheidungsschwelle deckt sich im vorliegenden Fall mit der Y-Achse. Dieses nur im Idealfall beim Empfänger ankommende Signal überlagert sich mit dem Störträgersignal, das im 2PSK-Diagramm als gestrichelt dargestellter und mit S gekennzeichneter Pfeil eingetragen ist. Beim Empfänger werden also die mit R gekennzeichneten Signale für die Daten -1 und 1 erhalten. Die empfangenen Signale R werden nun über einen ausreichend langen Zeitraum im Empfänger gemittelt. Da, wie erwähnt, die binären Daten 1, -1 sich im Mittel aufheben, erhält man nach der Mittlung den Störträger S. Beim Empfang des Datenblocks wird dann dieser Störträger von den empfangenen Daten subtrahiert, so daß als Ergebnis das von dem Störträger befreite Nutzsignal vorliegt.

Aufgrund der Tatsache, daß der Störträger selbst sich bezüglich Frequenz und Phase nur sehr wenig ändert, ist es im vorliegenden Fall möglich, das gemessene Störträgersignal bei zeitlich später empfangenen Daten zu verwenden.

Für den Fall, daß die Frequenz des Störträgers von der Mittenfrequenz des Kanals abweicht, läßt sich aus zwei aufeinanderfolgenden Messungen des Störträgersignals S ein Differenzwinkel berechnen. Dieser Differenzwinkel wird dann durch die Anzahl der zwischen den beiden Messungen liegenden Takte dividiert, so daß als Ergebnis die Winkelveränderung pro Takt vorliegt. Anhand dessen läßt sich für jedes Datum im Datenblock ein Störträgersignal berechnen.. Nach dem Abtasttheorem kommt man mit dieser Methode bis zu einer Differenzfrequenz, die der Hälfte des sich aus der Folgefrequenz der Testsequenzen ergebenden Wertes entspricht. Bei 25 Testsequenzen pro Sekunde ergibt sich daraus eine auszuregelnde Differenzfrequenz von ± 12,5 Hz. Aufgrund der geringen Frequenzschwankungen der Trägersignale von Rundfunksendern läßt sich dieses Verfahren also ohne weiteres für derartige Störungen einsetzen.

Übersteigen die Differenzfrequenzen diesen Wert, wie dies beispielsweise bei von Bildschirmen oder Netzteilen ausgehenden Störungen der Fall ist, wird die Störunterdrückung wie folgt durchgeführt:

Die im folgenden als Störlinien bezeichneten Störsignale können bis ± 4,5 KHz vom Träger entfernt liegen. Diese Grenzen entsprechen denen der vorgenannten Bandbreit des digitalen Signals. Sofern eine solche Störlinie die übertragenen Signale eines Datenblocks beeinflußt, ist davon auszugehen, daß die Störlinie auch in der Sendelücke meßbar ist. Zur Ermittlung der Störlinie werden also in den periodischen Lücken Störsignalmessungen durchgeführt und mit Hilfe einer Korrelation die Periode der Störlinie bestimmt. Anschließend läßt sich die ermittelte Stichprobe der Störlinie periodisch fortsetzen. Die Korrelation muß dabei für den I- und den Q-Anteil getrennt durchgeführt werden, damit Phasendrehungen erfaßt werden. Um die genaue Lage und Größe der Störlinie bezüglich eines zugehörigen Datenblocks zu bestimmen, wird anschließend innerhalb jeder Testsequenz eine erneute Korrelation ausgeführt. Es läßt sich dann von den jeweiligen Daten des übertragenen Datenblocks der zugehörige durch Interpolation ermittelte Wert der Störung subtrahieren. Damit ist das Nutzsignal auch von Störungen befreit, die beispielsweise Bildschirme oder Netzteile erzeugen.

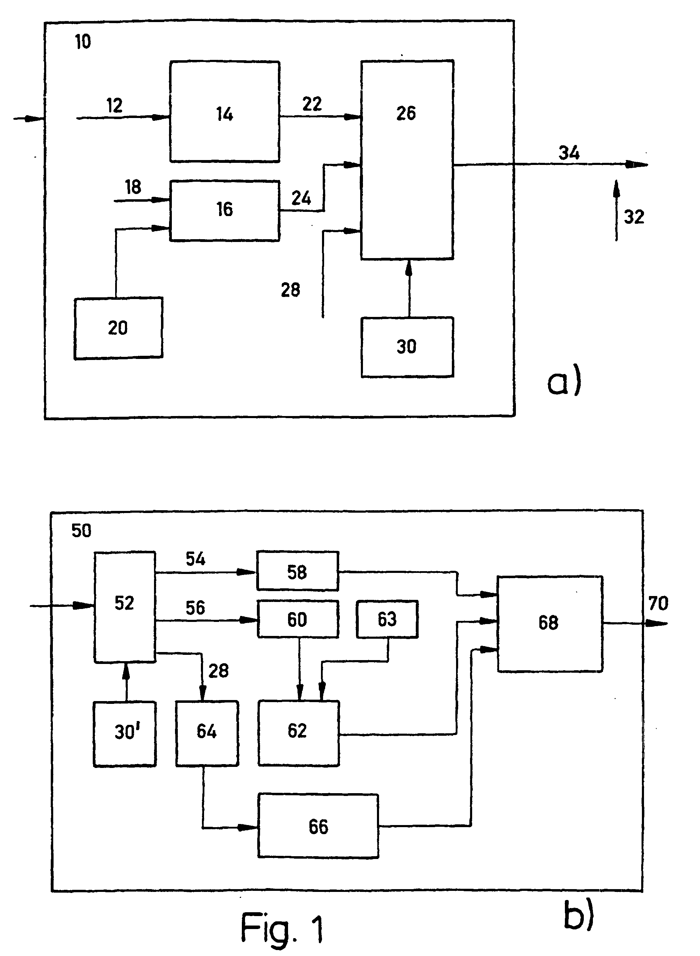

In Figur 1 ist zu dem beschriebenen Verfahren zur Verdeutlichung ein Funktionsblockdiagramm dargestellt, wobei in Figur 1a der Sender 10 und in Figur 1b der Empfänger 50 zu sehen ist. Dem Sender 10 werden die beispielsweise von einem Analog/Digitalwandler digitalisierten binären Daten 12 des Nutzsignals zugeführt, wo sie von einem 64 APSK-Modulator 14 in die entsprechende modulierte Form umgesetzt werden. Die Testsequenz wird von einem 2PSK-Modulator 16 erzeugt, der neben den empfängerrelevanten Informationen 18 eine von einem Pseudo-Random-Generator 20 erzeugte binäre Datenfolge moduliert. Diese Datenfolge ist ausreichend lang gewählt und darüber hinaus gleichanteilsfrei, so daß eine Mittelung dieser binären Daten einen vorbestimmten Wert, vorzugsweise Null ergibt.

Die beiden Modulatoren 14, 16 übertragen ihre Signale 22, 24 an einen Multiplexer 26, der die in Figur 2 gezeigte Abfolge der Sequenzen erzeugt, wobei zwischen Datenblock-Sequenz und Testsequenz jeweils eine Lücke 28 erzeugt wird. Der Multiplexer 26 erhält von einem Taktgeber 30 einen Takt.

Im Empfänger 50 wird nun dieser während der Übertragung mit einer Störung 32 beaufschlagte Datenstrom 34 einem Demultiplexer 52 zugeführt, der die einzelnen Sequenzen voneinander trennt und die Daten- beziehungsweise Testsequenz 54, 56 jeweils einem entsprechenden Demodulator 58, 60 zuführt. Der Demultiplexer 52 erhält von einem Taktgeber 30' einen Takt. Aus der Testsequenz 56 leitet eine Auswertevorrichtung 62 die exakte Trägerfrequenz und deren Phase sowie den exakten Takt und die Phasenlage des Takts ab, was zur Rückgewinnung der übertragenen digitalen Daten notwendig ist. Um diese Auswertung vornehmen zu können, wird der Auswertevorrichtung 62 eine identische Pseudo-Random-Datenfolge 63 wie beim Sender 10 zugeführt.

Die Auswertevorrichtung 62 übernimmt darüber hinaus die Mittelung eines bestimmten Abschnitts der Testsequenz 56, um das Störsignal zu bestimmen. Dieses Störsignal wird dann einer Subtraktionsvorrichtung 68 zugeführt, die es von dem gestörten Datensignal abzieht.

Das während der Lücke 28 vom Empfänger 50 empfangene Störsignal wird von einer Meßvorrichtung 64 erfasst. Das Meßsignal wird dann einer Korrelationsvorrichtung 66 zugeführt, die aus den Meßsignalen vorhergehender Messungen das Störsignal bestimmt und der Subtraktionsvorrichtung 68 zuführt. Am Ausgang 70 der Subtraktionsvorrichtung 68 steht dann das von Störungen befreite Nutzsignal zur Verfügung.

## Patentansprüche

1. Verfahren zur Übertragung von auf einen Träger modulierten digitalen Signalen, bei welchem eine Testsequenz in periodischem Wechsel mit einem Nutzsignal übertragen wird und ein Störträger vom empfangenen Nutzsignal subtrahiert wird, **dadurch gekennzeichnet, daß** die Testsequenz gleichanteilsfrei ist und die Testsequenz empfängerseitig gemittelt wird, um den Störträger zu ermitteln.

2. Verfahren nach Anspruch 1, **dadurch gekennzeichnet, daß** die Testsequenz niederstufig moduliert wird.

3. Verfahren nach Anspruch 2, **dadurch gekenazeichnet,** daß eine 2 PSK-Modulation für die Testsequenz verwendet wird.

4. verfahren nach einem der vorhergehenden Ansprüche, **dadurch gekennzeichnet, daß** für die Übertragung des Nutzsignals eine hochstufige Modulation, vorzugsweise 32 APSK oder 64 APSK verwendet wird.

5. Verfahren nach einem der vorhergehenden Ansprüche, **dadurch gekennzeichnet, daß** die Testsequenz eine Pseudo-random-Datenfolge aufweist, die ausreichend lang ist, um gleichanteilsfrei zu sein.

6. Verfahren nach einem der vorhergehenden Ansprüche, **dadurch gekennzeichnet, daß** periodisch für einen bestimmten Zeitraum kein Signal gesendet wird.

7. Verfahren nach Anspruch 6, **dadurch gekennzeichnet, daß** eine Störung durch Auswertung der empfangenen Signale während des sendefreien Zeitabschnitts bestimmt wird, wobei vorzugsweise Korrelationsmethoden eingesetzt werden.

8. Verfahren nach einem der vorhergehenden Ansprüche, **dadurch gekennzeichnet, daß** sich die Testsequenzen mit einer Frequenz von 25 Hz wiederholen.

## Claims

1. Method for transmitting digital signals modulated onto a carrier in which a test sequence is transmitted in periodic alternation with a wanted signal and an interference carrier is subtracted from the received wanted signal, **characterized in that** the test sequence has no direct component and the test sequence is averaged at the receiving end in order to determine the interference carrier.

2. Method according to claim 1, **characterized in that** the test sequence is modulated at a low level.

3. Method according to claim 2, **characterized in that** 2 PSK modulation is used for the test sequence.

4. Method according to any one of the preceding claims, **characterized in that** high-level modulation, preferably 32 APSK or 64 APSK, is used for the transmission of the wanted signal.

5. Method according to any one of the preceding claims, **characterized in that** the test sequence has a pseudo-random data sequence which is sufficiently long to have no direct component.

6. Method according to any one of the preceding claims, **characterized in that** periodically for a certain length of time no signal is transmitted.

7. Method according to claim 6, **characterized in that** an interference is determined by evaluating the received signals during the transmission-free period, use being made preferably of correlation methods.

8. Method according to any one of the preceding claims, **characterized in that** the test sequences are repeated at a frequency of 25 Hz.

## Revendications

1. Procédé de transmission de signaux numériques modulés sur un support, dans lequel une séquence test est transmise en alternance périodique avec un signal utile et un support de dérangement est soustrait du signal utile reçu, **caractérisé en ce que** la séquence test ne comporte pas de parties égales et **en ce que** la moyenne en est effectuée côté réception afin de déterminer le support de dérangement.

2. Procédé selon la revendication 1, **caractérisé en ce que** la fréquence test est modulée à bas niveau.

3. Procédé selon la revendication 2, **caractérisé en ce qu'**une modulation 2 PSK est utilisée pour la séquence test.

4. Procédé selon l'une des revendications précédentes, **caractérisé en ce qu**'une modulation à haut niveau, de préférence 32 APSK ou 64 APSK, est utilisée pour la transmission du signal utile.

5. Procédé selon l'une des revendications précédentes, **caractérisé en ce que** la séquence test présente une séquence de données pseudo-aléatoire suffisamment longue pour ne pas comporter de parties égales.

6. Procédé selon l'une des revendications précédentes, **caractérisé en ce que**, périodiquement, aucun signal n'est envoyé pendant un certain temps.

7. Procédé selon la revendication 2, **caractérisé en ce qu**'un dérangement est déterminé par analyse des signaux reçus pendant la période où aucune émission n'est effectuée, des méthodes de corrélation devant de préférence être utilisées.

8. Procédé selon l'une des revendications précédentes, **caractérisé en ce que** les séquences test se répètent à une fréquence de 25 Hz.
